# EUROPÄISCHE PATENTSCHRIFT

(11) **EP 3 342 015 B1**
(45) Veröffentlichungstag und Bekanntmachung des Hinweises auf die Patenterteilung: **18.08.2021**
(21) Anmeldenummer: 16720035.1
(22) Anmeldetag: 26.01.2016
(51) Int. Cl.: H02G 15/103

(54) **VORGEFERTIGTER MUFFENKÖRPER FÜR DIE VERBINDUNG ZWEIER HOCHSPANNUNGSPOLYMERKABEL FÜR GLEICHSTROM**
PREFABRICATED SLEEVE BODY FOR CONNECTING TWO HIGH-VOLTAGE POLYMER CABLES FOR DIRECT CURRENT
CORPS DE MANCHON PRÉFABRIQUÉ POUR RACCORDER DEUX CÂBLES POLYMÈRES À HAUTE TENSION POUR COURANT CONTINU

(30) Priorität: 27.08.2015 CH 12272015
(43) Veröffentlichungstag der Anmeldung: 04.07.2018
(73) Patentinhaber: GRAMESPACHER, Hansjörg, CH-5417 Untersiggenthal (CH)
(72) Erfinder: GRAMESPACHER, Hansjörg, CH-5417 Untersiggenthal (CH)
(74) Vertreter: Hepp Wenger Ryffel AG
(86) Internationale Anmeldenummer: PCT/CH2016/000015
(87) Internationale Veröffentlichungsnummer: WO 2017/031602

(56) Entgegenhaltungen:
- WO-A2-2013/004748
- DE-A1- 3 008 264
- DE-A1- 3 027 096
- FR-A1- 2 498 022
- NL-A- 8 103 461
- US-A- 3 816 639
- US-A- 4 424 410

## Beschreibung

Gegenstand der Erfindung gemäss den aufgeführten Ansprüchen ist eine Muffe für die Verbindung von Hochspannungspolymerkabeln für Gleichstrom (HVDC Polymerkabel). Kennzeichnend für die Erfindung ist, dass die Isolierung des Muffenkörpers aus mindestens zwei isolierenden Elastomeren besteht, wobei sich diese Elastomere in ihren elektrischen Eigenschaften unterscheiden und die Isolationsmaterialien auf bestimmte Weise in dem Muffenkörper angeordnet sind. Die isolierenden Elastomere können aus dem gleichen Basismaterial, wie z.B. einem Silikonelastomer, bestehen. Die unterschiedlichen elektrischen Eigenschaften können durch die unterschiedliche Zugabe von Füllstoffen, wie z.B. Russ, erzielt werden. Die Basismaterialien der isolierenden Elastomere können aber auch unterschiedlich sein. So kann z. B. das eine Isolationsmaterial aus einem EPR oder EPDM bestehen, während das andere aus einem Silikonelastomer bestehen kann.

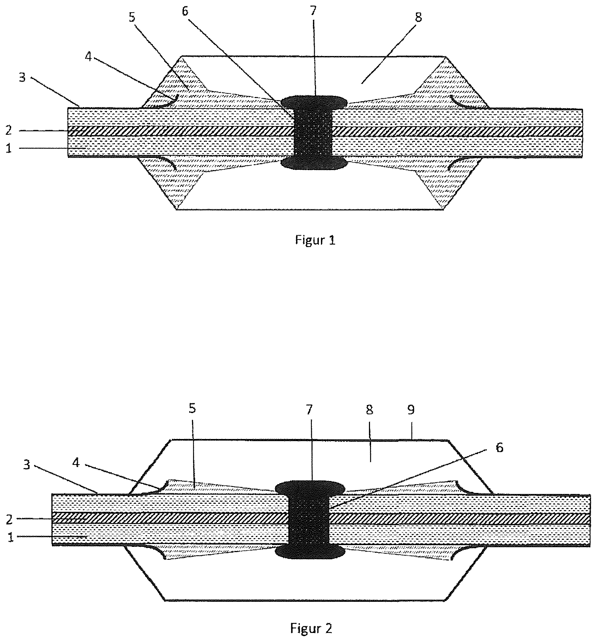

Bei Gleichspannung hängt die elektrische Feldverteilung bei der Kombination von mehreren isolierenden Materialien von dem spezifischen elektrischen Widerstand der beteiligten Materialien ab. Dabei ist die Feldverteilung in zwei verschiedenen Materialien im Allgemeinen durch das Verhältnis der spezifischen Widerstände der beteiligten Materialien gegeben. In Muffen für HVDC Polymerkabel sind die beteiligten Isolierstoffe die Kabelisolation, welche in der Regel aus einem vernetzten Polyethylen (XLPE) besteht und der Isolation des Muffenkörpers, die in der Regel aus einem Elastomer, wie z.B. einem Silikon oder einem EPR besteht. Da die spezifischen elektrischen Widerstände dieser Materialien sich mit der Temperatur verändern und diese Temperaturabhängigkeit der spezifischen Widerstände von den jeweiligen Materialien abhängig ist, ist es sehr schwierig, einen Isolierstoff für einen Muffenkörper zu finden, der in einem grossen Temperaturbereich eine gleichmässige Verteilung des elektrischen Feldes in dem Muffenkörper gewährleistet. Mit der vorliegenden Erfindung wird dieses Problem deutlich reduziert. Mit der Kombination von mindestens zwei isolierenden Elastomeren mit unterschiedlichen elektrischen Eigenschaften in dem Muffenkörper wird erreicht, dass die elektrische Feldverteilung innerhalb des Muffenkörpers über einen grossen Temperaturbereich gleichmässiger wird, als dies im Allgemeinen mit nur einem Isolationsmaterial möglich wäre. Durch die geeignete Anordnung der beiden Isolationsmaterialien in dem Muffenkörper kann gewährleistet werden, dass die elektrische Feldverteilung unter Gleichspannungsbeanspruchung relativ gleichmässig ist und dass die elektrische Festigkeit unter Stossspannungsbeanspruchung gross genug ist, so dass es zu keinem Durchschlag innerhalb des Muffenkörpers kommt. In Figur 1 ist eine Anordnung der beiden Isolationsmaterialien in einem HVDC Muffenkörper veranschaulicht. Das erste Isolationsmaterial (5) hat in einem Temperaturbereich von typischer Weise zwischen 0°C und 70 °C einen geringeren spezifischen elektrischen Widerstand als das zweite Isolationsmaterial (8). Da der spezifische elektrische Widerstand von der elektrischen Feldstärke abhängig sein kann, bei der er gemessen wurde, sind die spezifischen elektrischen Widerstände bei mehreren elektrischen Feldstärken in einem Bereich von typischer Weise 2 kV/mm bis 30 kV/mm zu bestimmen. Wichtig für die Funktionsweise der Muffe ist die Anordnung des ersten Isolationsmaterials (5). Da zwischen dem auf Erdpotenzial liegenden Deflektor (4) und der auf Hochspannungspotenzial liegenden Mittelelektrode (7) hohe elektrische Felder auftreten, muss das erste Isolationsmaterial (5) eine kontinuierliche Verbindung zwischen Deflektor und Mittelelektrode bilden. Ein Unterbruch in der Verbindung würde zu einer überhöhten Feldstärke in dem zweiten Isolationsmaterial mit dem höheren spezifischen elektrischen Widerstand führen. Ein weiteres wichtiges Merkmal im Aufbau des Muffenkörpers ist, dass zwischen dem Deflektor und der Kabelisolation keine Grenzfläche zwischen den beiden Isolationsmaterialien verläuft. Da Grenzflächen im Allgemeinen bezüglich der Durchschlagfestigkeit Schwachstellen darstellen und die elektrische Feldstärke bei Stossspannungen zwischen dem Deflektor und der Kabelisolation sehr hoch ist, soll in diesem Bereich keine Grenzfläche zwischen den beiden Isolationsmaterialien in dem Muffenkörper verlaufen.

Gattungsgemäße Muffenkörper, welche für Hochspannungskabel für Gleichspannung geeignet sind, sind aus der WO 2013/004748 A2 und der FR2 498 022 A1 bekannt, wobei letztere den Oberbegriff des Anspruchs 1 offenbart.

Weiterer Stand der Technik zur Reduzierung der starken Temperaturabhängigkeit des elektrischen Feldes in einer Hochspannungsmuffe für Gleichspannungen und zur Erzielung einer gleichmässigen Feldverteilung ist die Verwendung von einem nichtlinearen resistiven Feldsteuermaterial zur Aussteuerung der elektrischen Felder in dem Muffenkörper, wie es z.B. in dem Patent EP 2 197 080 A1" Flexible joint with resistive field grading material for HVDC cables and method for connecting same to HVDC cables" oder der Publikation" Christen T. et al; Nonlinear Resistive Electric Field Grading Part 1: Theory and Simulation, in IEEE Electrica!. Insululation Magazine Vol. 26, no. 6, pp. 47-59 Nov./Dez. 2010" beschrieben wird. Solche nichtlinearen resistiven Feldsteuermaterialien zeigen im Allgemeinen eine sehr starke Abhängigkeit des elektrischen Widerstands von der elektrischen Feldstärke und sind daher in der Lage, grosse Unterschiede in der elektrischen Feldverteilung auszugleichen. Ein bekanntes Beispiel für solch ein Feldsteuermaterial sind mit dotiertem Zinkoxid gefüllte Polymere.

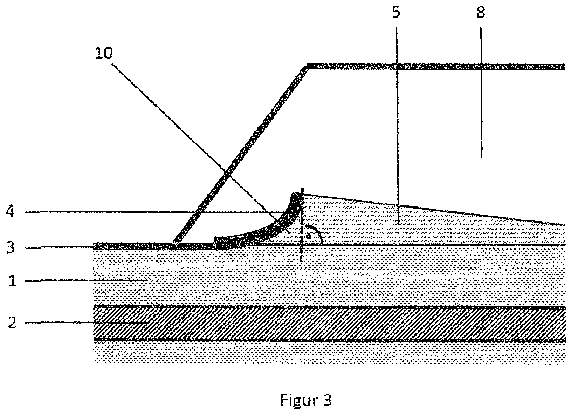

In der erwähnten Publikation wird beschrieben, wie eine Schicht aus einem Feldsteuermaterial zwischen dem Erdpotenzial der halbleitenden Schicht des Kabels und dem Hochspannungspotenzial beim Kabelverbinder die Abhängigkeit der elektrischen Feldverteilung von dem Verhältnis der Widerstände der Kabelisolation und der Muffenisolation aufhebt. Ein Nachteil dieser Lösung ist allerdings, dass bei der zusätzlichen Verwendung eines Seitfähigen Deflektors in der Kabelmuffe, wie er z.B. zur Erfüllung der Stossspannungsanforderungen notwendig sein kann, die feldsteuernde Schicht und damit die Grenzfläche zwischen dem Feldsteuermaterial und dem Isolationsmaterial in Gebieten unterhalb des Deflektors zu liegen kommt, die bei Stossspannungsbeanspruchung hohen elektrischen Feldern ausgesetzt ist. Dies kann unter Umständen zu einem Durchschlag des Muffenkörpers führen. Mit der vorliegenden Erfindung wird diese Problematik umgangen, da keine Grenzfläche in dem bei Stossspannungen elektrisch kritischen Gebiet (s. Figur 3) zu liegen kommt. Dieses elektrisch kritische Gebiet innerhalb des Muffenkörpers ist zum einen durch den Deflektor und zum anderen durch eine gedachte Ebene, die senkrecht zur Muffenachse durch die Spitze des Deflektors verläuft begrenzt.

Wichtig für die Funktionsweise der dargestellten Erfindung sind die spezifischen elektrische Widerstände der ausgewählten Isolationsmaterialien und deren Temperaturabhängigkeiten. Da die elektrischen Widerstände von Isolationsmaterialien im Allgemeinen auch von der elektrischen Feldstärke abhängen, muss bei der Festlegung der Volumenwiderstände auch die elektrische Feldstärke, bei denen diese elektrischen Widerstände gemessen wurden, angegeben werden. Die folgenden Angaben der spezifischen elektrischen Widerstände beziehen sich auf eine elektrische Feldstärke von 10 kV/mm. Der spezifische elektrische Widerstand von dem ersten Isolationsmaterial (5) mit dem geringeren elektrischen Widerstand soll bei Raumtemperatur zwischen 10¹⁰ Qcm und 10¹⁶ Ωcm und bei 70°C zwischen 10⁹ Qcm und 10¹⁵ Qcm liegen. Der spezifische elektrische Widerstand von dem zweiten Isolationsmaterial (8) mit dem höheren elektrischen Widerstand soll bei Raumtemperatur zwischen 10¹² Qcm und 10¹⁷ Qcm liegen. Bei 70 °C soll der Volumenwiderstand dieses Materials zwischen 10¹¹ Ωcm und 10¹⁶ Ωcm liegen. Der Unterschied zwischen den spezifischen elektrischen Widerständen der Isolationsmaterialen in dem Muffenkörper muss sowohl bei Raumtemperatur wie auch bei 70°C und der angegebenen Feldstärke von 10 kV/mm mindestens den Faktor 2 und maximal den Faktor 1000 betragen. Ein grösserer Unterschied in den spezifischen elektrischen Widerständen, z.B. ein Faktor zwischen 3 und 50, wird als Vorteil angesehen.

In einer bevorzugten Ausführungsform des erfindungsgemässen Muffenkörpers besteht das erste Isolationsmaterial (5) und/oder das zweite Isolationsmaterial (8) aus einem Ethylen-Propylen Gummi oder aus einem Ethylen-Propylen-Dien Gummi oder aus einem Silikonelastomer.

Die Verwendung dieser isolierenden Elastomere bringt den Vorteil, dass durch Zugabe unterschiedlicher Füllstoffe, wie z.B. Russ, mittels einem dem Fachmann bekannten Compoundierverfahren in einfacher Art und Weise unterschiedliche elektrische Eigenschaften des ersten und/oder zweiten Isolationsmaterials erzielt werden können.

### Beschreibung der Figuren:

Figur 1: Schematische Darstellung eines Muffenkörpers auf zwei verbundenen Hochspannungskabeln mit integriertem Deflektor (4), integrierter Mittelelektrode (7) und zwei Isolationsmaterialien mit unterschiedlichen elektrischen Eigenschaften. Das erste Isolationsmaterial (5) mit dem geringeren spezifischen elektrischen Widerstand verbindet den Deflektor mit der Mittelelektrode und umhüllt den Deflektor.
Figur 2: Schematische Darstellung eines Muffenkörpers auf zwei verbundenen Hochspannungskabel, wobei das erste Isolationsmaterial (5) mit dem geringeren spezifischen elektrischen Widerstand den ganzen Bereich zwischen dem Deflektor (4) und der Kabelisolation (1) ausfüllt, so dass die beiden Isolationsmaterialien des Muffenkörpers in diesem kritischen Gebiet keine Grenzfläche bilden. Die äussere Oberfläche des Muffenkörpers ist mit einer elektrisch leitfähigen Schicht (9) bedeckt.
Figur 3: Schematische Darstellung des kritischen Bereichs (10) unterhalb des Deflektors, in dem keine Grenzfläche zwischen den beiden Isolationsmaterialien des Muffenkörpers bestehen soll. Das kritische Gebiet wird durch den Deflektor (4) und die gedachte Ebene, die senkrecht zur Muffenachse durch die Spitze des Deflektors verläuft, begrenzt.

Beschreibung der Abkürzungen in den Figuren:
- 1:: Kabelisolation
- 2:: Kabelleiter
- 3:: Äussere halbleitende Schicht über der Kabelisolation
- 4:: Deflektor
- 5:: Erstes Isolationsmaterial in dem Muffenkörper
- 6:: Verbinder der Kabelleiter
- 7:: Mittelelektrode
- 8:: Zweites Isolationsmaterial in dem Muffenkörper
- 9:: Elektrisch leitfähige Schicht
- 10:: Bezeichnung des elektrisch kritischen Gebietes innerhalb des Muffenkörpers, in dem keine Grenzfläche zwischen den Isolationsmaterialien des Muffenkörpers liegen soll

## Patentansprüche

1. Muffenkörper für die Verbindung von polymeren Hochspannungskabeln für Gleichspannungen, bestehend aus zwei elektrisch leitfähigen Deflektoren (4), einer leitfähigen Mittelelektrode (7) und einer Isolierung aus zwei verschiedenen Isolationsmaterialien, wobei das erste und das zweite Isolationsmaterial aus Elastomeren bestehen, und wobei das erste Isolationsmaterial (5) den jeweiligen Deflektor (4) durchgehend mit der Mittelelektrode (7) verbindet, und wobei die Isolationsmaterialien innerhalb des Muffenkörpers so angeordnet sind, dass sich in dem Gebiet, welches durch den jeweiligen Deflektor und einer gedachten Ebene, die senkrecht zur Muffenachse durch die Spitze des jeweiligen Deflektors verläuft, begrenzt wird, keine Grenzfläche zwischen dem ersten Isolationsmaterial (5) und dem zweiten Isolationsmaterial (8) innerhalb des Muffenkörpers befindet, **dadurch gekennzeichnet, dass** der spezifische elektrische Widerstand von dem ersten Isolationsmaterial (5) bei einer Feldstärke von 10 kV/mm bei Raumtemperatur um mindestens den Faktor 2 aber maximal um den Faktor 1000 kleiner ist als der spezifische elektrische Widerstand des zweiten Isolationsmaterials (8).

2. Muffenkörper nach Anspruch 1, **dadurch gekennzeichnet, dass** der spezifische elektrische Widerstand des ersten Isoliermaterials (5) bei einer Feldstärke von 10 kV/mm bei Raumtemperatur zwischen 10¹⁰ Ωcm und 10¹⁶ Ωcm und bei einer Temperatur von 70°C zwischen 10⁹ Ωcm und 10¹⁵ Ωcm liegt.

3. Muffenkörper nach einem der vorherigen Ansprüche, **dadurch gekennzeichnet, dass** das erste Isolationsmaterial (5) und/oder das zweite Isolationsmaterial (8) aus einem Ethylen-Propylen Gummi oder aus einem Ethylen-Propylen-Dien Gummi oder aus einem Silikonelastomer besteht.

4. Muffenkörper nach einem der vorherigen Ansprüche, **dadurch gekennzeichnet, dass** die äussere Oberfläche des Muffenkörpers ganz oder teilweise mit einer elektrisch leitfähigen Schicht (9) bedeckt ist.

5. Muffenköper nach einem der vorherigen Ansprüche, **dadurch gekennzeichnet, dass** sich der spezifische elektrische Widerstand des ersten Isolationsmaterials (5) vom spezifischen elektrischen Widerstand des zweiten Isolationsmaterials (8) gemessen bei 10 kV/mm sowohl bei Raumtemperatur als auch bei einer Temperatur von 70°C um einen Faktor zwischen 3 und 50 unterscheiden.

## Claims

1. Sleeve body for the connection of polymeric high-voltage cables for direct voltages, consisting of two electrically conductive deflectors (4), a conductive center electrode (7) and an insulation of two different insulation materials, wherein the first and the second insulation material consist of elastomers, and wherein the first insulation material (5) continuously connects the respective deflector (4) to the center electrode (7), and wherein the insulation materials are arranged within the sleeve body in such a way that in the area, which is bounded by the respective deflector and an imaginary plane which runs perpendicular to the sleeve axis through the tip of the respective deflector, there is no interface between the first insulation material (5) and the second insulation material (8) within the sleeve body, **characterized in that** the specific electrical resistance of the first insulation material (5) at a field strength of 10 kV/mm at room temperature is smaller than the specific electrical resistance of the second insulation material (8) by at least a factor of 2 but at most by a factor of 1000.

2. The sleeve body according to claim 1, **characterized in that** the resistivity of the first insulating material (5) at a field strength of 10 kV/mm at room temperature is between 10¹⁰ Ωcm and 10¹⁶ Ωcm and at a temperature of 70°C is between 10⁹ Ωcm and 10¹⁵ Qcm.

3. The sleeve body according to any one of the preceding claims, **characterized in that** the first insulation material (5) and/or the second insulation material (8) is made of an ethylene-propylene rubber or of an ethylene-propylene-diene rubber or of a silicone elastomer.

4. The sleeve body according to any one of the preceding claims, **characterized in that** the outer surface of the sleeve body is completely or partially covered with an electrically conductive layer (9).

5. The sleeve body according to any one of the preceding claims, **characterized in that** the electrical resistivity of the first insulation material (5) differs from the electrical resistivity of the second insulation material (8) measured at 10 kV/mm both at room temperature and at a temperature of 70°C by a factor between 3 and 50.

## Revendications

1. Corps de manchon pour le raccordement de câbles haute tension en polymère pour des tensions continues, constitué de deux déflecteurs (4) électriquement conducteurs, d'une électrode centrale (7) conductrice et d'une isolation en deux matériaux isolants différents, le premier et le deuxième matériau isolant étant constitués d'élastomères, et le premier matériau isolant (5) reliant en continu le déflecteur (4) respectif à l'électrode centrale (7), et les matériaux isolants étant disposés à l'intérieur du corps de manchon de telle sorte que, dans la zone qui est délimité par le déflecteur respectif et un plan imaginaire qui s'étend perpendiculairement à l'axe du manchon à travers la pointe du déflecteur respectif, il n'y a pas d'interface entre le premier matériau isolant (5) et le second matériau isolant (8) à l'intérieur du corps du manchon, **caractérisé en ce que** la résistance électrique spécifique du premier matériau isolant (5) à une intensité de champ de 10 kV/mm à température ambiante est plus petite que la résistance électrique spécifique du second matériau isolant (8) d'au moins un facteur 2 mais au plus d'un facteur 1000.

2. Corps de manchon selon la revendication 1, **caractérisé en ce que** la résistivité du premier matériau isolant (5) est comprise entre 10¹⁰ Ωcm et 10¹⁶ Ωcm à une intensité de champ de 10 kV/mm à température ambiante et entre 10⁹ Ωcm et 10¹⁵ Ωcm à une température de 70°C.

3. Corps de manchon selon l'une quelconque des revendications précédentes, **caractérisé en ce que** le premier matériau isolant (5) et/ou le second matériau isolant (8) est composé d'un caoutchouc d'éthylène-propylène ou d'un caoutchouc d'éthylène-propylène-diène ou d'un élastomère de silicone.

4. Corps de manchon selon l'une quelconque des revendications précédentes, **caractérisé en ce que** la surface extérieure du corps de manchon est entièrement ou partiellement recouverte d'une couche électriquement conductrice (9).

5. Corps de manchon selon l'une quelconque des revendications précédentes, **caractérisé en ce que** la résistivité du premier matériau isolant (5) diffère de la résistivité du second matériau isolant (8) mesurée à 10 kV/mm à la fois à la température ambiante et à une température de 70°C par un facteur compris entre 3 et 50.
